# EUROPÄISCHE PATENTSCHRIFT

(11) **EP 1 430 996 B1**
(45) Veröffentlichungstag und Bekanntmachung des Hinweises auf die Patenterteilung: **29.08.2007**
(21) Anmeldenummer: 02028552.4
(22) Anmeldetag: 20.12.2002
(51) Int. Cl.: B23Q 35/10, B23C 3/12

(54) **Vorrichtung zur spanabhebenden Bearbeitung von Eckverbindungen von aus Kunststoffprofilen geschweissten Rahmen**
Machining unit for deburring corner joints of frames of welded plastic profiles
Unité d'usinage pour enlever des bavures de soudage des joints d'angle de cadres en profilés en matière plastique soudés

(43) Veröffentlichungstag der Anmeldung: 23.06.2004
(73) Patentinhaber: Urban GmbH & Co. Maschinenbau KG, D-87700 Memmingen (DE)
(72) Erfinder: Jägg, Josef, 88450 Berkheim (DE)
(74) Vertreter: Pfister, Stefan Helmut Ulrich

(56) Entgegenhaltungen:
- GB-A- 2 283 193

## Beschreibung

Die Erfindung betrifft eine Vorrichtung zur spanabhebenden Bearbeitung der Eckverbindungen von aus Kunststoff-Profilstücken geschweißten Rahmen oder Teilrahmen, insbesondere Fenster- oder Türrahmen, wobei mindestens zwei verschweißte Profilstücke eine Rahmenebene bestimmen, mit einem rotierenden Bearbeitungswerkzeug und die Rotationsachse des Bearbeitungswerkzeuges im wesentlichen parallel zur Rahmenebene des Rahmens angeordnet ist.

Zur Herstellung von Fenster- beziehungsweise Türrahmen oder Teilrahmen aus Kunststoffprofilen ist es bekannt, diese auf Gehrung zu schneiden und mittels beheizter Schweißspiegel an den Gehrungsflächen zu erwärmen und nach dem Plastifizieren des Kunststoffes durch Druck gegeneinander zu pressen. Dabei verbindet sich der plastifizierte Kunststoff beim Abkühlen miteinander, so daß eine feste Verbindung der Rahmenecken entsteht. Nachteilig bei diesem Prozeß ist es, daß durch das Plastifizieren und Aneinanderpassen an den Verbindungsstellen der Profilstäbe Schweißwülste entstehen, die beseitigt werden müssen. Dazu ist es bekannt, diese Schweißwülste mittels sogenannter Eckputzvorrichtungen zu bearbeiten. Derartige Eckputzvorrichtungen besitzen in der Regel sogenannte Abstech- beziehungsweise Abziehmesser, mit deren Hilfe die Schweißwülste abgestochen beziehungsweise abgezogen werden. Bei planparallelen Profilen bereitete diese Art der Bearbeitung regelmäßig wenig Schwierigkeiten. Derzeit werden von unterschiedlichen Profilherstellern für Kunststoffprofile neuartige Profile angeboten, die zumindst auf einer Seite nicht planparallel, sondern abgerundet, schräg, konkav oder konvex ausgebildet sind, um bestimmten formästhetischen Anforderungen der Verbraucher besser genügen zu können. Dabei können sowohl die Flügelprofile als auch die Blendrahmenprofile derartige Abrundungen beziehungsweise Abschrägungen aufweisen.

Die Bearbeitung solcher Profile nach dem Verschweißen ist mittels der zuvor beschriebenen Eckputzvorrichtungen nicht oder nur schlecht möglich, da die Abstech- beziehungsweise Abziehwerkzeuge in den Ecken der Profilkonturen nicht oder nur ungenügend wirksam werden können.

Aus dem Stand der Technik ist es weiter bekannt, die Ecken von geschweißten Kunststoffprofilrahmen mittels Fräsen zu bearbeiten. Die Bearbeitung beschränkt sich dabei meist auf die absoluten Eckbereiche, insbesondere in solchen Bereichen des Profils, in denen beispielsweise später die Dichtungen eingesetzt werden und die nach dem Einbau der Elemente nicht als Sichtfläche zu erkennen sind. Dazu ist es bekannt, Vorrichtungen einzusetzen, die mittels Stirnfräsen die überschüssigen Kunststoffteile der Schweißraupe entfernen. Die Rotationsachse derartiger Vorrichtungen befindet sich dabei etwa im rechten Winkel zur Rahmenebene. Für die Bearbeitung von später sichtbaren Flächen sind derartige Vorrichtungen nicht beziehungsweise nur bedingt geeignet, da an solche Flächen aufgrund ästhetischer Anforderungen der Verbraucher sehr hohe Genauigkeitsanforderungen zu stellen sind.

Aus der europäischen Patentschrift EP 0 705 659 B1 ist eine Bearbeitungseinheit zum Bearbeiten der Eckverbindungen von aus Profilstücken geschweißten Rahmen bekannt. Diese Eckputzvorrichtung weist eine Bearbeitungseinheit zur Abtragung der durch das Schweißen der Profilstücke an den Eckverbindungen entstandenen Schweißraupen auf, wobei diese ein Bearbeitungswerkzeug sowie zwei seitlich davon positionierte Tastelemente umfaßt. Die Bearbeitungseinheit ist in einer Richtung senkrecht zur Aufnahmeebene des Rahmens entlang der Eckverbindung verschiebbar und wird mittels einer Federvorspannung gegen die Kurvenkontur des Rahmens gedrückt, wobei das Bearbeitungswerkzeug als Abstech- oder Abziehmesser mit V-förmig aufeinander zulaufenden Schneiden ausgebildet ist. Diese Eckputzvorrichtung zeichnet sich dadurch aus, daß die Verlängerungen der Tastflanken der beiden Taster V-förmig aufeinander zulaufen und die Schneiden des Bearbeitungswerkzeuges einschließen.

Diese zuvor beschriebene Ausführungsform einer Eckputzvorrichtung ist beschränkt auf eine Kurvenkontur der Profile, die nach innen gerichtet ist. Die Bearbeitung unterschiedlicher Profile erfordert jeweils ein Umrüsten der Abstechmesser. Auch durch die Ausbildung der V-förmigen Abtasteinheiten zur Gewährleistung eines sauberen Arbeitens ist entsprechend des jeweils eingesetzten Profiles umzurüsten. Der mechanische Aufwand zum Einstellen und zum Umrüsten auf eine anderen Profilart ist sehr hoch. Speziell bei sehr "engen" Rundungen beziehungsweise Rundungen mit kleinen Radien ist die Bearbeitung mittels der in der europäischen Patentschrift 0 705 659 B1 vorgestellte Lösung nicht möglich. Oftmals weisen vorbeschriebene Rahmen neben dem gewölbten Querschnittsbereich auch einen im wesentlichen ebenen Querschnittsbereich auf, in dem ebenfalls der Schweißwulst zu entfernen ist. In der Regel ist für diesen im wesentlichen ebenen Bereich ein weiteres Abstechmesser einzusetzen. Das bedeutet, daß die Abstechbewegung von zwei hintereinander eingesetzten Messern durchgeführt werden muß. Dies ist aufwendig. Des Weiteren ist zu beachten, daß, wenn die beiden Messer nicht exakt in die gleiche Nut greifen, unschöne Absätze am Rahmen sichtbar zurückbleiben.

Die GB 2 283 193 A offenbart eine Profilverputzmaschine zum Verputzen von geschweißten Gehrungsverbindungen von extrudierten Kunststofffensterrahmezz. Die Verputzmaschine weist ein Maschinenbett mit einem Laufwagen auf. Der Laufwagen ist in einer Richtung parallel zur geschweißten Rahmenverbindung verschiebbar. Der Laufwagen weist ein Räderpaar auf und einen zwischen den Rädern mittig angeordneten Fräser. Bei Bearbeitung der Gehrung des Kunststoffrahmenprofils laufen die Räder des Laufwagens auf dem Profil der Schenkel des Kunatstoffrahmenprofils ab, so daß der Fräser die Gehrung gleichzeitig bearbeitet. Die Offenbarung dieser Druckschrift bildet den Oberbegriff von Anspruch 1.

Ausgehend von diesem zuvor beschriebenen Stand der Technik ist es Aufgabe der Erfindung, eine Lösung bereitzustellen, die die zuvor beschriebenen Nachteile nicht mehr aufweist. Es ist Aufgabe der Erfindung, eine Lösung bereitzustellen, die eine Bearbeitung auch unterschiedlichst geformter Profile mit geringstem beziehungsweise ohne Umrüstaufwand ausführt.

Diese Aufgabe wird gelöst durch die in den Patentansprüchen 1 und 21 angegebenen Merkmale. Vorteilhafte Weiterbildungen sind Gegenstand der Unteransprüche.

Ausgehend von der Erkenntnis, daß mittels Abstechbeziehungsweise Abziehvorrichtungen eine rationelle Bearbeitung unterschiedlichst geformter Profilarten nur mit sehr hohem Aufwand beziehungsweise überhaupt nicht möglich ist und daß mittels Stirnträger keine brauchbaren Ergebnisse bei der Bearbeitung von Sichtflächen erzielt werden , wird vorgeschlagen, eine Vorrichtung zur spanabhebenden Bearbeitung der Eckverbindungen von aus Kunststoff-Profilstücken geschweißten Rahmen oder Teilrahmen, insbesondere Fenster- oder Türrahmen zur Verfügung zu stellen, wobei mindestens zwei verschweißte Profilstücke eine Rahmenebene bilden und wobei die Vorrichtung ein Bearbeitungswerkzeug aufweist. Die Vorrichtung zeichnet sich dadurch aus, daß die Rotationsachse des Bearbeitungswerkzeugs im wesentlichen parallel zur Rahmenebene des Rahmens angeordnet ist. Durch die erfindungsgemäße Anordnung der Rotationsachse des Bearbeitungswerkzeuges parallel zur Rahmenebene erfolgt der Abtrag der Schweißwulst an den beiden Nutseiten in gleicher Weise, das heißt, jeweils in Rotationsrichtung des Bearbeitungswerkzeuges. Dies führt dazu, daß die Ränder der entstehenden Nut gleichartig ausgebildet sind, was gegenüber den bekannten Fingerfräsern von Vorteil ist. Gleichzeitig erlaubt der Einsatz diesr Erfindung den universellen Einsatz, wodurch Umrüstzeiten gespart werden.

Durch die Anordnung der Rotationsachse des Bearbeitungswerkzeugs parallel zur Rahmenebene des Rahmens ist es nunmehr möglich, daß das Bearbeitungswerkzeug als Umfangsfräser oder als Sägeblatt ausgebildet ist, wobei dadurch nunmehr unterschiedliche Profilformen mittels des gleichen Bearbeitungswerkzeuges bearbeitbar sind. Die Anordnung der Rotationsachse des Bearbeitungswerkzeugs in einer Ebene, die im wesentlichen parallel zu der Rahmenebene angeordnet ist, ermöglicht auch ein sauberes und präzises Arbeiten sowohl im Eckeninnenbereich der Profile als auch in den planparallelen Bereichen, ohne dabei das Werkzeug abzusetzen. Am Rahmen werden dadurch Absätze vermieden.

Die Umrüstung des Bearbeitungswerkzeuges bei Änderung des Profiles ist durch diese Art der Anordnung nicht mehr notwendig. Dieser Arbeitsgang wird lediglich dann notwendig, wenn das Bearbeitungswerkzeug verschlissen ist bzw. bei Änderung der Form der Nut, die durch die Fräsung erstellt werden soll. Insbesondere der Aufwand zum Justieren des Werkzeugs wird durch die Anordnung der Rotationsachse erheblich verringert. Durch die Art der Bearbeitung mittels Umfangsfräsen bzw. Sägen werden saubere und konturenscharfe Fräsnuten erhalten, die Anforderungen der Verbraucher besser erfüllen als bisher.

Entsprechend einer bevorzugten Weiterbildung der erfindungsgemäßen Lösung ist es vorgesehen, die Rahmenebene bevorzugt horizontal anzuordnen. Selbstverständlich ist es auch möglich, die Rahmenebene vertikal oder schräg anzuordnen, wobei dadurch der maschinentechnische Aufwand unter Umständen höher ist. Die Art der Ausführung der erfindungsgemäßen Lösung ist nicht von der Anordnung der Rahmenebene im Raum abhängig, sondern vielmehr von der Lage der Rotationsachse des Bearbeitungswerkzeugs zur Rahmenebene des Rahmens.

Ein weiterer Aspekt der Erfindung ist dadurch angegeben, daß Bearbeitungswerkzeuge mit unterschiedlichen Schneiden bzw. Schneidzähnen zur Durchführung von Formfräsungen an den Eckverbindungen einsetzbar sind. Dabei können unterschiedlichste Werkzeug- bzw. Schneidenformen eingesetzt werden. Diese Formen sind zum Beispiel die eines Rechtecks, trapezförmig ausgebildet bzw. halbrund abgefast, winklig abgefast bzw. entsprechend der gewünschten Form der Bearbeitungsnut jeweils ausgebildet. Der Wechsel des Bearbeitungswerkzeuges ist lediglich dann notwendig, wenn entsprechend bestimmten Kundenanforderungen bestimmte Formen von Bearbeitungsnuten gewünscht werden. Der Austausch des Bearbeitungswerkzeugs ist nicht damit verbunden, daß die gesamte Vorrichtung neu justiert werden muß, wie das bei den aus dem Stand der Technik bekannten Vorrichtungen bisher üblich ist. Die Herstellung von entsprechenden Sägeblättern ist kostengünstig möglich.

Entsprechend einer Weiterbildung der erfindungsgemäßen Lösung ist es vorgesehen, daß das Bearbeitungswerkzeug an einem Werkzeugträger angeordnet ist, der über die zu bearbeitende Rahmenecke führbar ist. Die Anordnung des Werkzeugträgers kann dabei sowohl an der Werkzeugmaschine erfolgen, sie kann aber auch mittels gesondert dafür vorzusehender Führungs- bzw. Befestigungseinrichtungen so befestigt werden, daß das Bearbeitungswerkzeug über der Rahmenebene der jeweils zu bearbeitenden Rahmenecke führbar ist.

Ein Aspekt der erfindungsgemäßen Lösung ist auch dadurch angegeben, daß die Antriebseinrichtung für das Bearbeitungswerkzeug auf der Rotationsachse dieses Werkzeugs angeordnet ist. Dadurch ist maschinentechnisch ein geringerer Aufwand notwendig, weil durch diese Art der Anordnung Getriebe nicht erforderlich sind. Da insbesondere im Inneneckbereich verhältnismäßig wenig Platz zur Verfügung steht (dies hängt im wesentlichen von dem Durchmesser des Fräswerkzeuges beziehungsweise dem Sägeblatt ab), ist es bei dieser Variante günstig, wenn verhältnismäßig kleinbauende und leistungsstarke Antriebe auf der Antriebswelle eingesetzt werden. Wird alternativ ein Werkzeug eingesetzt, das einen verhältnismäßig großen Durchmesser aufweist, rückt die Rotationsachse mehr von dem Innenbereich weg, was dann die Anordnung eines entsprechenden größeren Antriebes ermöglicht.

Entsprechend einer Weiterbildung der Erfindung wurde auch gefunden, daß es von Vorteil ist, wenn die Antriebseinrichtung für das Bearbeitungswerkzeug an dem Werkzeugträger angeordnet ist. Dabei ist es weiterhin von Vorteil, wenn die Antriebseinrichtung oberhalb der Rahmenebene, bevorzugt oberhalb der Rotationsachse angeordnet ist. Bei dieser Variante wird die Antriebseinrichtung außerhalb des verhältnismäßig engen Eckbereiches angeordnet und stört somit nicht bei der Bearbeitung, auch wenn kleine Werkzeuge mit geringem Durchmesser eingesetzt werden.

Erfindungsgemäß ist es auch von Vorteil, wenn das Bearbeitungswerkzeug und die Antriebseinrichtung mittels eines Getriebes verbunden sind. Die Art des Getriebes kann unterschiedlichste Ausbildungsformen aufweisen. Vorteilhafterweise ist es jedoch sinnvoll, recht einfache Lösungen, beispielsweise in Form eines Riementriebes, zu wählen.

Entsprechend einer Weiterbildung der erfindungsgemäßen Lösung ist es vorgesehen, daß das Bearbeitungswerkzeug von einer Paßscheibe gehalten ist. Dadurch wird erreicht, daß unterschiedliche Stärken von Bearbeitungswerkzeugen eingesetzt werden können, wobei dann unterschiedliche Paßscheiben entsprechend der jeweiligen Stärke der Bearbeitungswerkzeuge zur Verfügung stehen sollten bzw. daß die Paßscheibe mehrteilig ausgebildet ist, so daß bestimmte Teile entsprechend der jeweiligen Stärke des Bearbeitungswerkzeuges dann bei Wechsel des Bearbeitungswerkzeuges mit entnommen beziehungsweise hinzugefügt werden müssen.

Die Erfindung zeichnet sich dadurch aus, daß das Bearbeitungswerkzeug an dem Werkzeugträger eine Führungseinrichtung bzw. Führungssteuerung aufweist, die die Kontur der Rahmenoberfläche aufnimmt und diese Kontur auf das Bearbeitungswerkzeug derart überträgt, daß das Bearbeitungswerkzeug der Kontur des Profils folgt, wobei die Führungseinrichtung als gleitendes Tastelement, vorzugsweise in unmittelbarer Nähe zum Bearbeitungswerkzeug, ausgebildet ist. Entsprechend wird erreicht, daß zum einen unterschiedliche Profilformen mittels der Vorrichtung bearbeitbar sind und daß gleichzeitig bestimmte fertigungstechnisch bedingte Differenzen an den Konturen des Profils ausgeglichen werden können.

Für den Fall, daß die Vorrichtung an einer Werkzeugmaschine korrespondierend zu dieser Werkzeugmaschine angeordnet ist und diese Werkzeugmaschine eine CNC-Steuerung aufweist, ist es von Vorteil, wenn die Führungseinrichtung mit dieser CNC-Steuerung korrespondiert derart, daß in der Speichereinheit der CNC-Steuerung die Konturen von Rahmenoberflächen unterschiedlichster Profiltypen hinterlegt sind und die CNC-Steuerung diese Konturen je nach Auswahl des entsprechenden Profiltyps an die Führungseinrichtung derart weitergibt, daß die Führungseinrichtung wiederum der Kontur des Profils folgt.

Es ist auch vorgesehen, daß die Vorrichtung zur spanabhebenden Bearbeitung selbst eine CNC-Steuerung aufweist, in deren Speichereinheit die Kontur der Rahmenoberflächen unterschiedlicher Profiltypen hinterlegbar und derart abrufbar sind, daß die Vorrichtung bei der Bearbeitung der Kontur des eingegebenen Profiltyps folgt.

Die federnde Lagerung (entlang mindestens einer, bevorzugt entlang zweier oder aller Raumachsen) der Bearbeitungswerkzeuge im Werkzeugträger ist sowohl bei der Ausführung mit einer CNC-Steuerung als auch bei einer Ausführung der Vorrichtung mittels mechanischer Abtastsysteme von Vorteil, weil dadurch bestimmte fertigungstechnisch bestimmte Maßtoleranzen der Profiloberflächen ausgeglichen werden können.

In einer Weiterbildung der erfindungsgemäßen Vorrichtung ist es vorgesehen, daß die Führungeinrichtung durch mindestens ein Tastelement zur Verfügung gestellt ist, welches die Kontur des Profils abgreift und auf das Bearbeitungswerkzeug derart überträgt, daß es der Kontur des Profils bei der Bearbeitung der Schweißraupe folgt.

Zum zügigen Wechsel des Bearbeitungswerkzeuges bei Verschleiß bzw. Änderung der Bearbeitungsnut ist es vorgesehen, daß an dem Werkzeugträger bzw. im Werkzeugträger eine Schnellspannvorrichtung zum Wechsel des Bearbeitungswerkzeuges vorgesehen ist.

Eine weitere Ausbildung der Erfindung sieht vor, daß zur Einstellung der Höhe des Bearbeitungswerkzeuges bzw. des Tastelementes wenigstens ein ortsfest zum Bearbeitungswerkzeug angeordneter, vorzugsweise einstellbarer Höhentaster zur Anlage an einem Referenzpunkt des zu bearbeitenden Profils vorgesehen ist.

Die Vorrichtung zeichnet sich auch dadurch aus, daß der Werkzeugträger beziehungsweise das Bearbeitungswerkzeug derart angeordnet ist, daß er zumindest in einer Ebene, die rechtwinklig zur Rahmenebene ist (oder im Raum), bewegbar ist. Durch diese Beweglichkeit wird erreicht, daß das Bearbeitungswerkzeug im Bezug auf die Ecke an jeder beliebigen Stelle positionierbar beziehungsweise bewegbar ist. Durch die Erfindung ist es prinzipiell auch möglich, nicht nur die Sichtflächen an der Rahmenoberfläche zu bearbeiten, es können in gleicher Weise auch die Inneneckbereiche, die in der Regel im eingebauten Zustand verdeckt sind, bearbeitet werden. Die Erfindung erlaubt eine hohe Flexibilität, wodurch Spezialwerkzeuge für die verschiedenen Bearbeitungen eingespart werden können. Insbesondere erlaubt die Erfindung, daß die Bearbeitung im wesentlichen in einem Arbeitsgang durchgeführt werden kann und das Bearbeitungswerkzeug vom Rahmen nicht abgesetzt werden muß, wodurch die im Stand der Technik bekannten Justierarbeiten für zwei hintereinander arbeitende Werkzeuge entfallen. Gleichzeitig wird ein ordentliches Erscheinungsbild des so bearbeiteten Rahmens sichergestellt.

In einer weiterbildung der Erfindung ist es vorgesehen, zwei Tastelemente seitlich zum Bearbeitungswerkzeug anzuordnen, wobei die Führungseinrichtung vorteilhafterweise derart ausgebildet ist, daß sie Differenzen zwischen den von beiden Tastelementen aufgenommenen Konturen ausgleicht.

Die vorgestellte Erfindung erlaubt eine hohe Flexibilität in der Bearbeitung und erspart hierdurch den Einsatz von zusätzlichen, für einen Bearbeitungsschritt spezialisierten Werkzeugen. Gleichzeitig können, gemäß dem Vorschlag der Erfindung, die Bearbeitungswerkzeuge leicht gewechselt werden, um speziellen Nutformen (Hohlkehle, Spitzkehle und so weiter) einzuarbeiten. Des weiteren führt der Einsatz der Erfindung an den Nuträndern zu gleichartigen Bearbeitungen und somit zu einem einheitlichen Erscheinungsbild dieses Rahmenbereiches.

Dabei ist die Erfindung auf die Ausgestaltung des zu bearbeitenden Profilquerschnittes in keinster Weise beschränkt.

Durch entsprechende Wahl der Durchmesser der Sägeblätter und der übrigen Geometrie weiter, können die verschiedensten Profiltypen zuverlässig und ordentlich bearbeitet werden. Die Erfindung ist einsetzbar auf Profiltypen, die im Querschnitt im wesentlichen parallel, planparallel oder abgerundet, schräg, konkav oder konvex ausgebildet sind. Auch ovale und elliptische Formen sind problemlos bearbeitbar.

Die Aufgabe der Erfindung wird auch gelöst durch eine Bearbeitungsmaschine, insbesondere Eckenverputzmaschine für die Bearbeitung von aus Kunststoffprofilstücken geschweißten Rahmen bzw. Teilrahmen mit einer Eckenkonturfräse nach einem der zuvor beschriebenen Ausführungsformen der erfindungsgemäßen Vorrichtung.

Die Erfindung wird nachfolgend anhand von Ausführungsbeispielen und Zeichnungen näher erläutert. Es zeigen:
- Fig. 1:: Eine dreidimensionale Darstellung einer Ausführungsform der Erfindung mit Rahmenecke.
- Fig. 2:: Eine Seitenansicht einer Ausführungsform der Erfindung.
- Fig. 3:: Eine Vorderansicht der Ausführungsform, nach Fig. 2.
- Fig. 4:: Eine Ansicht von oben mit der Ausführungsform entsprechend der Figuren 2 und 3.
- Fig. 5:: Bearbeitungswerkzeug mit Schneiden.
- Fig. 6:: Ein am Profil angeordnetes Tastelement.

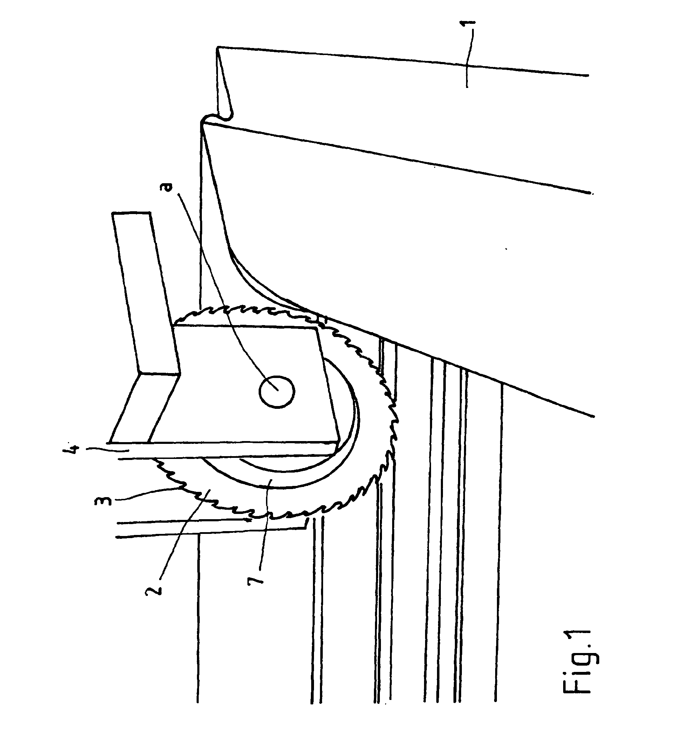

Fig. 1 zeigt eine dreidimensionale Darstellung einer Ausführungsform der erfindungsgemäßen Vorrichtung, mit einem Teil eines Rahmens 1. Das Bearbeitungswerkzeug 2 mit den Schneiden 3 ist dabei an einem Werkzeugträger 4 drehbar gelagert. Die Roationsachse a ist parallel zu der in dieser Darstellung nicht dargestellten Rahmenebene b angeordnet. Die Rahmenebene b ist dabei durch die den Rahmen 1 bildenden Profilstrücke definiert. Der Rahmen 1 besteht dabei aus einer Mehrzahl von winklig verschweißten Kunststoffprofilstücken. Allein an der Darstellung gemäß der Fig. 1 wird deutlich, daß mit der erfindungsgemäßen Vorrichtung problemlos die Kontur der Rahmenoberfläche, die in diesem Beispiel gewölbt ausgeführt ist, gefolgt werden kann. Zum Ausgleich von Maßtoleranzen der Breite des Bearbeitungswerkzeugs bei notwendigem Wechsel ist eine Paßscheibe 7 ebenfalls auf der Rotationsachse a für das Bearbeitungswerkzeug 3 angeordnet.

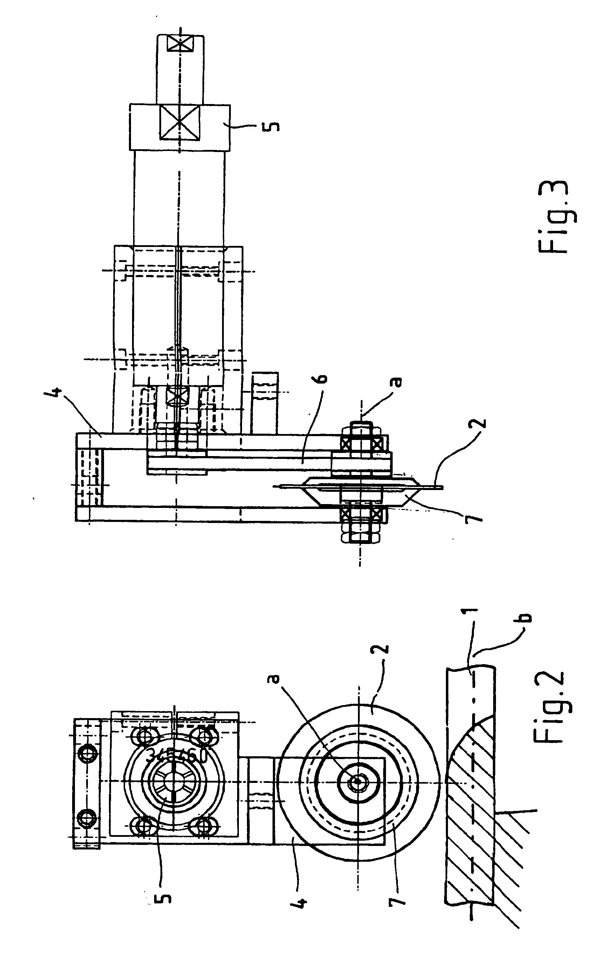

Fig. 2 zeigt eine Seitenansicht einer Ausführungsform der Erfindung. Aus dieser Figur wird deutlich, daß die Rotationsachse a für das Bearbeitungswerkzeug 2 parallel zur Rahmenebene b angeordnet ist. Die Rahmenebene b entspricht in diesem Beispiel im wesentlichen der Zeichnungsebene. Mit dem Bezugszeichen 1 ist wiederum der Rahmen, beziehungsweise ein Teil des Rahmens bezeichnet. An dem Werkzeugträger 4 sind in dem gewählten Ausführungsbeispiel das Bearbeitungswerkzeug 2 und die Antriebseinrichtung 5 oberhalb der Rahmenebene b angeordnet. Das Bezugszeichen 7 bezeichnet dabei wieder die in der Figur 1 beschriebene Paßscheibe, die Antriebseinrichtung 5 ist mit dem Bearbeitungswerkzeug 2 über ein Getriebe, in diesem Beispiel ein Riementrieb, verbunden. Als Antriebseinrichtung 5 ist zum Beispiel ein Elektromotor oder auch ein Pneumatikmotor einsetzbar. Auch andere bekannte Motoren können als Antriebseinrichtung 5 dienen.

Fig. 3 zeigt eine Vorderansicht der Ausführungsform der Erfindung nach der Fig. 2. In dieser Figur besser zu sehen ist die Verbindung des Bearbeitungswerkzeuges 2 mit der Antriebseinrichtung 5 durch das Getriebe 6.

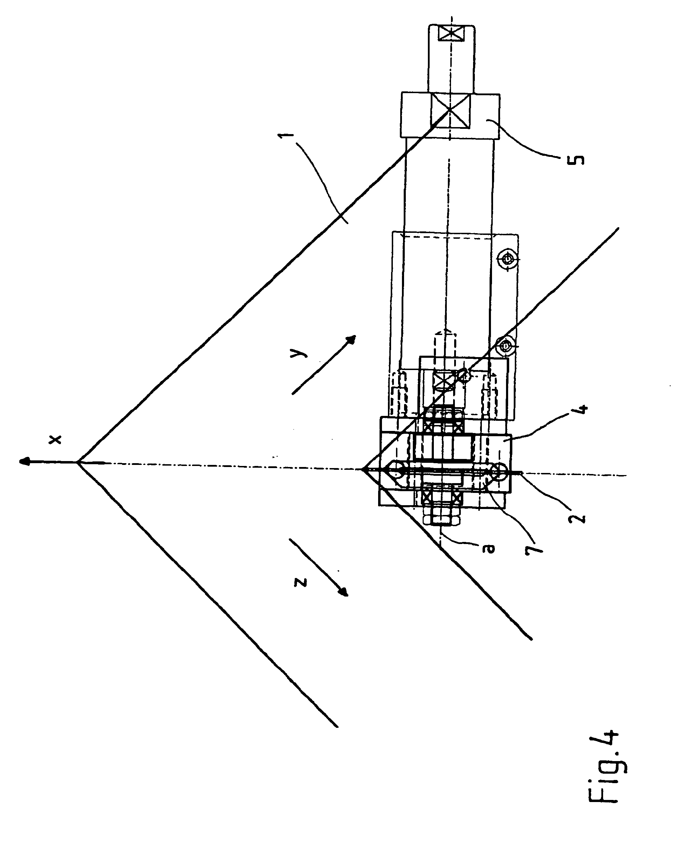

Fig. 4 zeigt eine Ansicht von oben mit der gleichen Ausführungsform der Erfindung, die bereits in den Figuren 2 und 3 beschrieben wurde. Die Ausführungsform gemäß der Figur 4 zeigt jedoch deutlich, daß der Werkzeugträger derart angeordnet ist, daß er sowohl in der X, als auch in der Y und Z - Ebene der Rahmenebene b bewegbar ist.

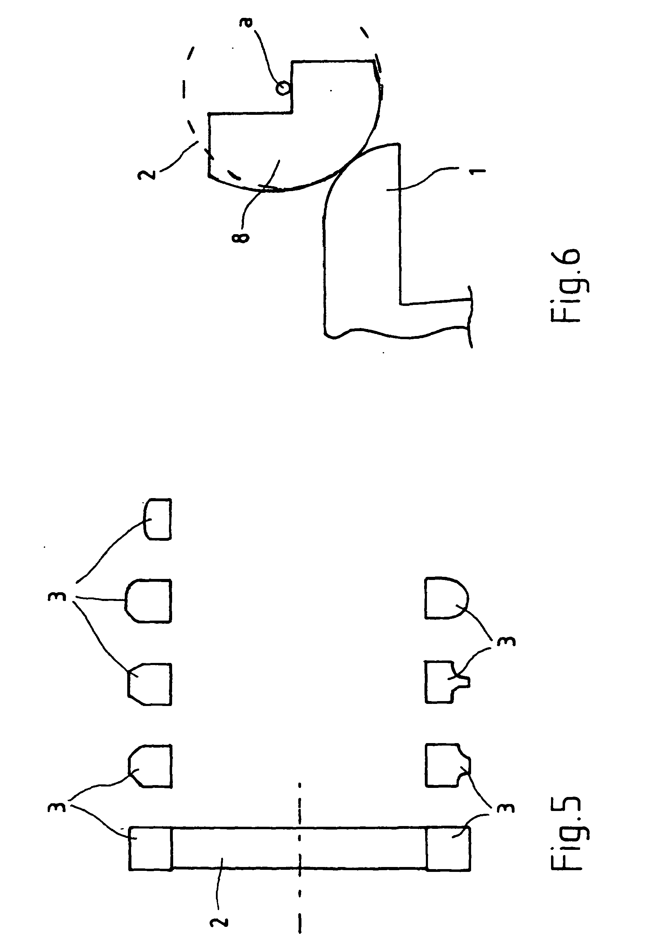

Fig. 5 zeigt ein Bearbeitungswerkzeug 2 mit verschiedenen Schneiden 3. Die Darstellung gemäß Figur 5 soll lediglich verdeutlichen, daß für die Ausführung von Fräsarbeiten mittels der erfindungsgemäßen Vorrichtung die unterschiedlichsten Bearbeitungswerkzeuge 2 eingesetzt werden können. Die Wahl der Schneiden 3 erfolgt dabei entsprechend des jeweiligen Kundenwunsches beziehungsweise entsprechend des jeweils zu bearbeitenden Profils und der dafür geeignetsten Ausführungsform der Bearbeitungsnaht beziehungsweise -nut.

Fig. 6 zeigt ein am Profil 1 angeordnetes Tastelement 8. Dieses Tastelement 8 greift die Kontur des Profiles 1 ab und überträgt diese Kontur auf das Bearbeitungswerkzeug. Dieses ist in der Darstellung gemäß Fig. 4 nicht gesondert dargestellt, da hierzu eine Reihe unterschiedlicher Ausführungsvarianten denkbar ist. Das Tastelement kann beispielsweise seitlich des Bearbeitungswerkzeuges 2, welches in der Darstellung gemäß Fig. 6 lediglich gestrichelt angedeutet ist, angeordnet sein. Das Tastelement 8 ist auf der zum abzutastenden Profil zugewandten Seite derart ausgebildet, daß es eine Rundung mit einem Radius aufweist, der der Kontur der Profiloberfläche derart entspricht, daß das Tastelement 8 diese Kontur exakt aufbeziehungsweise abnehmen kann. Der Radius des Tastelementes 8 ist dabei vorzugsweise derart gewählt, daß die Berührungsfläche des Radiuses auf der Profiloberfläche sehr klein gehalten ist, beziehungsweise nur punktförmig ausgeführt ist. Das Tastelement 8 nimmt eine Lage im Bezug auf das Bearbeitungswerkzeug 2 ein, die derart gewählt ist, daß es mit diesem korrespondiert und die Schneiden 3 des Bearbeitungswerkzeuges 2 die Bearbeitungsstellung dann erreichen, wenn das Tastelement die Kontur des Profils 1 abgreift.

Wie in Fig. 6 gezeigt, kann der Flugkreis des Bearbeitungswerkzeuges 2 im Bereich der Auflage des Taststückes 8 auf dem Rahmen 1 deckungsgleich sein. Es ist aber auch möglich, das Bearbeitungswerkzeug 2 bezüglich des Taststückes 8 vor- oder zurückstehen zu lassen, dies hängt von der jeweiligen geometrischen Anordndung ab, insbesondere wo das Taststück 8 auf dem Rahmen 1 im Verhältnis zum Schneidpunkt des Bearbeitungswerkzeuges 2 liegt (Tastpunkt). Dabei gleitet der Tastpunkt während der Bearbeitung auf dem Taststück 8, entsprechend der jeweiligen Schneidposition der jeweiligen Rundung.

## Patentansprüche

1. Vorrichtung zur spanabhebenden Bearbeitung der Eckverbindungen von aus Kunststoff-Profilstücken geschweißten Rahmen oder Teilrahmen, insbesondere Fenster- oder Türrahmen mit einem Bearbeitungswerkzeug, wobei mindestens zwei verschweißte Profilstücke eine Rahmenebene bestimmen wobei die Rotationsachse (a) des Bearbeitungswerkzeugs (2) im Wesentlichen parallel zur Rahmenebene (b) des Rahmens (1) angeordnet ist und wobei eine Führungseinrichtung vorgesehen ist, die die Kontur der Rahmenoberfläche aufnimmt und diese auf das Bearbeitungswerkzeug überträgt, **dadurch gekennzeichnet, daß** die Führungseinrichtung an dem Werkzeugträger (4) vorgesehen und durch mindestens ein Tastelement (8) zur Verfügung gestellt ist, das Tastelement seitlich an dem Bearbeitungswerkzeug (2) angeordnet ist und der Flugkreis des Bearbeitungswerkzeuges (2) zum Tastelement im Bereich der Auflage des Tastelements (8) auf dem Rahmen (1) in Richtung der Rotationsachse (a) des Bearbeitungswerkzeuges (2) deckungsgleich ist.

2. Vorrichtung nach dem vorhergehenden Anspruch 1, **dadurch gekennzeichnet, daß** die Rahmenebene (b) bevorzugt im wesentlichen horizontal angeordnet ist.

3. Vorrichtung nach einem der vorhergehenden Ansprüche, **dadurch gekennzeichnet, daß** das Bearbeitungswerkzeug (2) als Umfangsfräser oder Sägeblatt ausgebildet ist.

4. Vorrichtung nach einem der vorhergehenden Ansprüche, **dadurch gekennzeichnet, daß** Bearbeitungswerkzeuge mit unterschiedlichen Schneiden (3) zur Durchführung von Formfräsen an der Eckverbindung mit im Querschnitt variierbaren Formen, wie zum Beispiel die eines Rechteckes, trapezförmig ausgebildet, halbrund oder abschnittsweise rund abgefast, winklig abgefast ausgebildet, auf der Rotationsachse (a) vorgesehen sind.

5. Vorrichtung nach einem der vorhergehenden Ansprüche, **dadurch gekennzeichnet, daß** das Bearbeitungswerkzeug (2) an einem Werkzeugträger (4) angeordnet ist, der über die zu bearbeitende Rahmenecke führbar ist.

6. Vorrichtung nach einem der vorhergehenden Ansprüche, **dadurch gekennzeichnet, daß** die Antriebseinrichtung (5) auf der Rotationsachse (a) des Bearbeitungswerkzeugs (2) angeordnet ist.

7. Vorrichtung nach einem der vorhergehenden Ansprüche, **dadurch gekennzeichnet, daß** an dem Werkzeugträger (4) die Antriebseinrichtung (5) für das Bearbeitungswerkzeug (2) angeordnet ist.

8. Vorrichtung nach einem der vorhergehenden Ansprüche, **dadurch gekennzeichnet, daß** die Antriebseinrichtung (5) oberhalb der Rahmenebene, bevorzugt oberhalb der Rotationsachse (a) angeordnet ist.

9. Vorrichtung nach einem der vorhergehenden Ansprüche, **dadurch gekennzeichnet, daß** das Bearbeitungswerkzeug (2) und die Antriebseinrichtung (5) mittels eines Getriebes (6), vorzugsweise eines Riementriebes, miteinander verbunden sind.

10. Vorrichtung nach einem der vorhergehenden Ansprüche, **dadurch gekennzeichnet, daß** das Bearbeitungswerkzeug von einer Paßscheibe (7) gehalten ist.

11. Vorrichtung nach einem der vorhergehenden Ansprüche; **dadurch gekennzeichnet, daß** die Führungseinrichtung für das Bearbeitungswerkzeug (2) an dem Werkzeugträger (4) angeordnet ist.

12. Vorrichtung nach einem der vorhergehenden Ansprüche, **dadurch gekennzeichnet, daß** die Führungseinrichtung eine CNC-Steuerung besitzt, in deren Speichereinheit die Kontur der Rahmenoberfläche, zum Beispiel durch Eingabe eines bestimmten Profiltyps, hinterlegt ist.

13. Vorrichtung nach einem der vorhergehenden Ansprüche, **dadurch gekennzeichnet, daß** die Vorrichtung zur spanabhebenden Bearbeitung selbst eine CNC-Steuerung aufweiset.

14. Vorrichtung nach einem der vorhergehenden Ansprüche, **dadurch gekennzeichnet, daß** das Bearbeitungswerkzeug (2) im Werkzeugträger (4) federnd gelagert ist.

15. Vorrichtung nach einem der vorhergehenden Ansprüche, **dadurch gekennzeichnet, daß** im Werkzeugträger (4) eine Schnellspannvorrichtung zum Wechseln des Bearbeitungswerkzeuges (2) vorgesehen ist.

16. Vorrichtung nach einem der vorhergehenden Ansprüche, **dadurch gekennzeichnet, daß** zur Einstellung der Höhe des Bearbeitungswerkzeuges (2) beziehungsweise des Tastelementes (8) wenigstens ein ortsfest zum Bearbeitungswerkzeug (2) angeordneter, vorzugsweise einstellbarer Höhentaster zur Anlage an einem Referenzpunkt des zu bearbeitenden Profils (1) vorgesehen ist.

17. Vorrichtung nach einem der vorhergehenden Ansprüche, **dadurch gekennzeichnet, daß** der Werkzeugträger bzw. das Bearbeitungswerkzeug (3) derart angeordnet ist, daß er/es zumindest in einer Ebene, welche rechtwinklig zur Rahmenebene (b) liegt, bewegbar ist.

18. Vorrichtung nach einem der vorhergehenden Ansprüche, **dadurch gekennzeichnet, daß** zwei seitlich des Bearbeitungswerkzeugs (2) angeordnete Tastelemente (8) vorgesehen sind, wobei die Führungseinrichtung derart ausgebildet ist, daß sie Differenzen der von den Tastelementen (8) aufgenommenen Konturen ausgleicht

19. Vorrichtung nach einem der vorhergehenden Ansprüche, **dadurch gekennzeichnet, daß** das Tastelement (8) auf der zum abzutastenden Profil zugewandten Seite eine Rundung aufweist mit einem Radius, der der Kontur der Profiloberfläche derart entspricht, daß das Tastelement (8) diese Kontur exakt auf- beziehungsweise abnehmen kann.

20. Vorrichtung nach einem der vorhergehenden Ansprüche, **dadurch gekennzeichnet, daß** das Tastelement (8) eine Lage in Bezug auf das Bearbeitungswerkzeug (2) einnimmt, derart, daß es mit diesem korrespondiert und die Schneiden (3) des Bearbeitungswerkzeugs (2) die Bearbeitungsstellungen erreichen, wenn das Tastelement (8) die Kontur am Profil abgreift.

21. Bearbeitungsmaschine, insbesondere Eckenverputzmaschine für die Bearbeitung von aus Kunststoffprofilstücken geschweißten Rahmen mit einer Vorrichtung zur spanabhebenden Bearbeitung nach einem der vorhergehenden Ansprüche.

## Claims

1. Device for the cutting machining of the corner joinings of frames or part frames welded from synthetic profile parts, in particular window or door frames, with a machining tool, wherein at least two welded profile parts define a frame plane, wherein the rotational axis (a) of the machining tool (2) is arranged substantially parallel to the frame plane (b) of the frame (1), and wherein a guide means is provided which takes the contour of the surface of the frame and transfers it to the machining tool, **characterised in that** the guide means is provided at the tool support (4) and is made available by at least one tracing element (8), the tracing element is arranged at the side of the machining tool (2), and the flight circle of the machining tool (2) to the tracing element is congruent in the region of the support of the tracing element (8) on the frame (1) in the direction of the rotational axis (a) of the machining tool (2).

2. Device according to the preceding claim 1, **characterised in that** the frame plane (b) is arranged preferably substantially horizontally.

3. Device according to one of the preceding claims, **characterised in that** the machining tool (2) is designed as peripheral miller or saw blade.

4. Device according to one of the preceding claims, **characterised in that** machining tools are provided on the rotational axis (a) with different cutting edges (3) for carrying out profiling at the corner joining with shapes varying in cross section, for example designed like a square, trapezoid, semicircular or chamfered circularly in sections, chamfered angularly.

5. Device according to one of the preceding claims, **characterised in that** the machining tool (2) is arranged on a tool support (4) which can be guided over the frame corner to be machined.

6. Device according to one of the preceding claims, **characterised in that** the driving means (5) is arranged on the rotational axis (a) of the machining tool (2).

7. Device according to one of the preceding claims, **characterised in that** on the tool support (4) the driving means (5) for the machining tool (2) is arranged.

8. Device according to one of the preceding claims, **characterised in that** the driving means (5) is arranged above the frame plane, preferably above the rotational axis (a).

9. Device according to one of the preceding claims, **characterised in that** the machining tool (2) and the driving means (5) are connected to each other by means of a gear (6), preferably a belt drive.

10. Device according to one of the preceding claims, **characterised in that** the machining tool is held by a tolerance disc (7).

11. Device according to one of the preceding claims, **characterised in that** the guide means for the machining tool (2) is arranged at the tool support (4).

12. Device according to one of the preceding claims, **characterised in that** the guide means has a CNC-control in the storage unit of which the contour of the frame surface is stored, for example by entering a certain type of profile.

13. Device according to one of the preceding claims, **characterised in that** the device has a CNC-control for cutting machining itself.

14. Device according to one of the preceding claims, **characterised in that** the machining tool (2) is supported springily in the tool support (4).

15. Device according to one of the preceding claims, **characterised in that** in the tool support (4) a quick gripping device is provided for changing the tool (2).

16. Device according to one of the preceding claims, **characterised in that** for adjusting the height of the machining tool (2) or the tracing element (8) at least one height tracer arranged stationarily to the machining tool (2) which can preferably be adjusted is provided for resting on a reference position of the profile (1) which has to be machined.

17. Device according to one of the preceding claims, **characterised in that** the tool support or the machining tool (3) is arranged in such a way that it can move at least in a plane rectangular to the frame plane (b).

18. Device according to one of the preceding claims, **characterised in that** two tracing elements (8) arranged at the side of the machining tool (2) are provided, the guide means being designed in such a way that it compensates differences of the contours taken by the tracing elements (8).

19. Device according to one of the preceding claims, **characterised in that** the tracing element (8) has a curvature on the side facing the profile to be traced with a radius which corresponds with the contour of the profile surface in such a way that the tracing element (8) can take up or survey this contour exactly.

20. Device according to one of the preceding claims, **characterised in that** the tracing element (8) has a position with regard to the machining tool (2) in such a way that it corresponds with it, and the cutting edges (3) of the machining tool (2) reach the machining positions when the tracing element (8) traces the contour at the profile.

21. Machine tool, in particular corner trimming machine for the machining of frames welded from synthetic profile parts with a device for the cutting machining according to one of the preceding claims.

## Revendications

1. Dispositif d'usinage comportant des outils coupants destiné à l'usinage des angles soudés des profilés en plastique formant des cadres ou des parties de cadres, en particulier des cadres de fenêtres ou de portes dont au moins deux profilés soudés déterminent le plan (b) du cadre (1) par rapport auquel l'axe de rotation (a) de l'outil d'usinage (2) est situé approximativement parallèlement, le dispositif comportant un système de guidage translatant la position de la surface supérieure du cadre vers l'outil d'usinage, **caractérisé en ce que** le système de guidage est situé au niveau du porte-outil (4) et comporte au moins un capteur de proximité (8) situé sur le côté de l'outil d'usinage (2) dont la limite de déclenchement suit parfaitement le cercle décrit au niveau du cadre (1) par l'outil d'usinage (2) autour de son axe de rotation (a).

2. Dispositif selon la revendication 1, **caractérisé en ce que** le plan (b) du cadre est orienté, de préférence, horizontalement.

3. Dispositif selon une des deux revendications précédentes, **caractérisé en ce que** l'outil d'usinage (2) est une fraise ou une lame de scie.

4. Dispositif selon une des revendications précédentes, **caractérisé en ce que** les outils d'usinage comportent sur l'axe de rotation (a) des lames coupantes différentes (3) permettant de fraiser des formes au niveau des angles des cadres de section variables telles la section d'un rectangle, d'un trapézoïde, d'une demi-sphère voire d'une section partiellement circulaire ou d'une section triangulaire.

5. Dispositif selon une des revendications précédentes, **caractérisé en ce que** l'outil d'usinage (2) est situé au niveau d'un porte-outil (4), qui peut être déplacé au-dessus de l'angle du cadre à usiner.

6. Dispositif selon une des revendications précédentes, **caractérisé en ce que** le dispositif de commande (5) est situé sur l'axe de rotation (a) de l'outil d'usinage (2).

7. Dispositif selon une des revendications précédentes, **caractérisé en ce que** le dispositif de commande (5) est situé au niveau du porte-outil (4) de l'outil d'usinage (2).

8. Dispositif selon une des revendications précédentes, **caractérisé en ce que** le dispositif de commande (5) est situé de préférence au-dessus du plan du cadre et de préférence au-dessus de l'axe de rotation (a).

9. Dispositif selon une des revendications précédentes, **caractérisé en ce que** l'outil d'usinage (2) et le dispositif de commande (5) sont interconnectés par un engrenage (6) et de préférence par un système à courroie.

10. Dispositif selon une des revendications précédentes, **caractérisé en ce que** l'outil d'usinage est maintenu par une rondelle d'ajustage (7).

11. Dispositif selon une des revendications précédentes, **caractérisé en ce que** le système de guidage de l'outil d'usinage (2) est situé au niveau du porte-outil (4).

12. Dispositif selon une des revendications précédentes, **caractérisé en ce que** le système de guidage comporte un système de type CNC dont la mémoire peut contenir la courbe de surface du cadre, par exemple à l'aide de données décrivant un certain type de profilé.

13. Dispositif selon une des revendications précédentes, **caractérisé en ce que** la machine d'usinage disposants d'outils coupants comporte un système de type CNC.

14. Dispositif selon une des revendications précédentes, **caractérisé en ce que** l'outil d'usinage (2) est maintenu à l'intérieur du porte-outil (4) de façon élastique.

15. Dispositif selon une des revendications précédentes, **caractérisé en ce qu'**il existe à l'intérieur du porte-outil (4) un système de serrage rapide prévu pour le changement des outils d'usinage (2).

16. Dispositif selon une des revendications précédentes, **caractérisé en ce qu'**au moins un capteur fixe par rapport à l'outil d'usinage et dans une position réglable de préférence par rapport à un point de référence du profilé (1) à usiner, permet d'ajuster la hauteur de l'outil d'usinage (2) et celle du capteur (8).

17. Dispositif selon une des revendications précédentes, **caractérisé en ce que** le porte-outil et l'outil d'usinage (2) sont maintenus de façon mobile dans un plan perpendiculaire au plan du cadre (b).

18. Dispositif selon une des revendications précédentes, **caractérisé en ce que** deux capteurs (8) sont situés sur les côtés latéraux de l'outil d'usinage (2) reliés à un dispositif de guidage équilibrant les différences entre les deux capteurs (8).

19. Dispositif selon une des revendications précédentes, **caractérisé en ce que** le capteur (8) possède du côté de la surface du profilé à capter une forme arrondie dont le rayon de courbure correspond à celui du profilé lui permettant de suivre et de transmettre précisément la forme de la surface du profilé.

20. Dispositif selon une des revendications précédentes, **caractérisé en ce que** la hauteur du capteur (8) est identique à celle de l'outil d'usinage (2), permettant ainsi dès que le capteur (8) atteint la surface du profilé, l'action de la lame coupante (3) de l'outil (2) sur le cadre sans risque d'endommagement du profilé.

21. Machine d'usinage, en particulier machine de nettoyage et d'usinage des angles d'un cadre soudé à partir de profilés en plastique, comportant un dispositif d'usinage à lames coupantes selon une des revendications précédentes.
